Europäisches Patentamt

(19) European Patent Office

Office européen des brevets

(11) Numéro de publication : **0 284 469 B1**

(12) # FASCICULE DE BREVET EUROPEEN

(45) Date de publication du fascicule du brevet :
18.12.91 Bulletin 91/51

(51) Int. Cl.⁵ : **G01N 15/06**

(21) Numéro de dépôt : 88400480.5

(22) Date de dépôt : 01.03.88

(54) **Dispositif de mesure en temps réel, de la teneur d'un gaz en un aérosol.**

(30) Priorité : 04.03.87 FR 8702934

(43) Date de publication de la demande :
28.09.88 Bulletin 88/39

(45) Mention de la délivrance du brevet :
18.12.91 Bulletin 91/51

(84) Etats contractants désignés :
BE DE GB IT NL SE

(56) Documents cités :
US-A- 2 721 495
US-A- 3 694 085
PATENT ABSTRACTS OF JAPAN, vol. 10, no.
68 (P-437)[2125], 18 mars 1986, page 32 P 437;
& JP-A-60 207 037
REVIEW OF SCIENTIFIC INSTRUMENTS, vol.
38, no. 1, janvier 1967, pages 73-77; J.H. NASH
et al.: "Sampling device for liquid droplets"

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Mulcey, Philippe
2 Chemin de Montjay
F-91440 Bures Sur Yvette (FR)**
Inventeur : **Pourprix, Michel
7, Allée des Maraichers
F-91310 Montlhery (FR)**
Inventeur : **Pybot, Patrick
11 Avenue de la Croix Boisée
F-78830 Bonnelles (FR)**
Inventeur : **Vendel, Jacques
9, rue Buffon
F-91700 Sainte Geneviève des Bois (FR)**

(74) Mandataire : **Mongrédien, André et al
c/o BREVATOME 25, rue de Ponthieu
F-75008 Paris (FR)**

EP 0 284 469 B1

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

La présente invention concerne un dispositif de mesure en temps réel, de la teneur d'un gaz en un aérosol. Elle s'applique notamment à la mesure de l'efficacité des filtres pour aérosols au moyen d'un aérosol fluorescent appelé "uranine" qui est en fait de la fluorescéine sodée de formule $C_{10}H_{20}O_5Na_2$.

On connaît déjà une technique de mesure de l'efficacité des filtres pour aérosols au moyen d'uranine, par le document suivant :

(1) Séparateurs aérauliques -Méthode de mesure de l'efficacité des filtres au moyen d'un aérosol d'uranine (fluorescéine). Norme Française Homologuée NF-X-44.011 -Mai 1972.

Selon cette technique, en vue d'obtenir les concentrations massiques d'uranine en amont et en aval d'un filtre à tester, concentrations qui sont nécessaires au calcul de l'efficacité de ce filtre, on effectue la séquence d'opérations suivante (pour l'amont et l'aval du filtre) : collection de l'aérosol sur un filtre de prélèvement pendant une durée prédéterminée, dissolution de l'aérosol ainsi recueilli dans un volume connu d'une solution ammoniacale de pH 9 et mesure de la réponse en fluorescence de la solution au moyen d'un fluorimètre.

La plupart des spécialistes de ce type de mesures reconnaissent que l'uranine possède l'ensemble des caractéristiques "idéales" recherchées pour un aérosol de test, comme l'indique le document suivant :

(2) L.P. MURPHY, S.J. FERNANDEZ, B.G. MOTES, Comparison of HEPA filter test methods in corrosive environments -16th DOE Nuclear Air Cleaning Conference. Conf. 801038, 1980 p. 67 à 85.

Cependant, la technique rappelée plus haut présente l'inconvénient de ne pas permettre une mesure en temps réel et à l'aide d'un appareillage unique, de l'efficacité du filtre pour aérosols.

La présente invention a pour but de remédier à cet inconvénient.

On connaît déjà par le document Patent Abstracts of Japan vol. 10, n° 68, P437 (2125), 18 mars 1986 p. 32, P437 et JP-A-60207037 (Nitsuta Zerachin K.K.) 18.10.85 un procédé et un appareil de mesure de la teneur de l'air en un aérosol. L'appareil comprend des moyens aptes à condenser sur l'aérosol prélevé une vapeur d'un liquide, les particules d'aérosol jouant le rôle de noyaux de condensation, ainsi que des moyens de mesure vers lesquels les particules condensées sont guidées au moyen d'une pompe à vide et comptées de façon précise au moyen d'un ultra-microscope.

On connaît aussi par le document US-A-3694085 un dispositif de mesure de la teneur de l'air en un aérosol.

Ce dispositif comprend un chambre de condensation munie d'une source de lumière et d'un photodétecteur qui sont disposés de part et d'autre de la chambre, en vue de projeter un faisceau lumineux à travers cette chambre et d'obtenir un signal électrique de sortie représentatif de la modification du faisceau lumineux par les goutelettes de liquide formées dans la chambre de condensation.

L'invention a pour objet un dispositif de mesure de la teneur d'un gaz en un aérosol à partir d'un prélèvement de ce gaz, comprenant des moyens de grossissement, aptes à condenser sur l'aérosol prélevé une vapeur d'un liquide, de façon à obtenir des gouttelettes d'une solution de l'aérosol dans le liquide, caractérisé en ce qu'il comprend en outre :

— des moyens d'impaction, aptes à projeter ces gouttelettes sur un support prévu pour recueillir au moins une fraction connue de ces gouttelettes,

— des moyens d'analyse en continu des gouttelettes ainsi recueillies, ces moyens d'analyse étant spécifiques de l'aérosol dont la teneur est à mesurer et aptes à fournir des informations relatives à ladite teneur, et

— des moyens électroniques de traitement des informations, aptes à déterminer la teneur à partir de ces informations.

Certes, on connait déjà des moyens d'impaction, notamment par le document suivant :

(3) Inertial Impactors : Theory, Design and Use, par V.A. Marple et K. Willeke, dans Fine particles — aerosol generation, measurement, sampling, and analysis- edited by Benjamin Y.H. Liu -Academic Press, Inc., 1976, p. 411 à 445.

Mais les moyens d'impaction connus ne sont pas susceptibles de fonctionner avec des aérosols de petite taille (notamment de taille inférieure à environ 0,5 micromètre). Ceci est rendu possible dans la présente invention, par l'association inattendue de moyens d'impaction et de moyens de grossissement, ces derniers ayant pour rôle de solubiliser l'aérosol et de permettre ladite impaction en augmentant l'inertie de cet aérosol.

De tels moyens de grossissement ont déjà été proposés pour permettre le comptage par des procédés optiques, des particules d'aérosols de petite dimension.

Un exemple de moyens de grossissement est notamment donné dans les documents suivants :

(4) Demande de brevet français n° EN7222432 du 21 juin 1972

(5) Detection of ultra-fine particles by means of a continuous flux condensation nuclei counter, par J. Bricard, P. Delattre, G. Madelaine, M. Pourprix, dans Fine particles — aerosol generation, measurement, sampling, and analysis- edited by Benjamin Y.H. Liu -Academic Press, Inc., 1976, p. 565 à 580.

Les moyens de l'invention coopèrent en vue du résultat recherché, à savoir la mesure, en temps réel, de la teneur du gaz en l'aérosol.

Par "mesure en temps réel", on entend, d'une part, une mesure dont le résultat est connu à chaque instant, la durée de la mesure n'étant plus prédéterminée mais fixée par l'opérateur qui l'interrompt lorsqu'il juge la précision sur le résultat satisfaisante et d'autre part, une mesure dont l'obtention du résultat, à l'aide d'un appareil unique, n'est pas différée par la séquence d'opérations décrites plus haut.

La présente invention permet en outre de conserver l'ensemble des qualités de la technique rappelée plus haut :

— spécificité de la détection vis-à-vis de l'aérosol d'essai,

— utilisation d'un aérosol solide, sphérique, peu hygroscopique et utilisable jusqu'à plus de 150°C,

— grande sensibilité de détection, et

— obtention d'une réponse en masse.

Selon un mode de réalisation particulier du dispositif objet de l'invention, l'aérosol est fluorescent et les moyens d'analyse comprennent des moyens opto-électroniques d'excitation et de détection de fluorescence, aptes à fournir les informations.

Dans une réalisation particulière, les moyens opto-électroniques comprennent :

— des moyens de formation d'un faisceau lumineux excitateur de fluorescence,

— des moyens de détection d'une lumière de fluorescence résultant de l'excitation, et

— des moyens fibres optiques aptes à transmettre le faisceau excitateur vers les gouttelettes recueillies et transmettre la lumière de fluorescence vers les moyens de détection.

On peut ainsi améliorer la sensibilité de la mesure, vis-à-vis de la technique rappelée plus haut.

De préférence, le support est transparent au faisceau excitateur et à la lumière de fluorescence, les gouttelettes sont recueillies sur une face du support, les moyens à fibres optiques comprennent deux groupes de fibres optiques, chaque fibre optique ayant une extrémité placée en regard de l'autre face du support, les extrémités des fibres optiques, qui sont placées en regard de l'autre face du support, sont entremêlées et les deux groupes sont respectivement prévus pour transmettre le faisceau excitateur et la lumière de fluorescence.

Selon un autre mode de réalisation particulier du dispositif objet de l'invention, l'aérosol étant radioactif et donc émetteur d'un rayonnement de type alpha, béta, ou gamma, les moyens d'analyse comprennent des moyens de détection de ce rayonnement (détecteur nucléaire) aptes fournir lesdites informations aux moyens électroniques associés. On effectue ainsi la mesure de la radioactivité des particules d'aérosol déposées sur le support, ce dernier étant bien entendu approprié à ladite mesure.

L'aérosol peut être solide. Il peut s'agir par exemple de fluorescéine sodée qui est utilisable dans un gaz tel que l'air pour tester des filtres pour aérosols, comme on l'a déjà indiqué plus haut.

L'aérosol entrant dans le dispositif peut, au contraire, être liquide. Il peut s'agir par exemple de dioctyl phtalate (DOP). L'aérosol considéré peut être marqué avec un composé fluorescent dans lequel il est soluble (par exemple le POTOMAK YELLOW dans le cas du DOP) afin de l'utiliser également dans un gaz tel que l'air pour tester des filtres pour aérosols. Dans ce cas, on utilisera généralement, un liquide identique à cet aérosol pour alimenter les moyens de grossissement.

La présente invention sera mieux comprise à la lecture de la description qui suit, d'exemples de réalisation donnés à titre purement indicatif et nullement limitatif, en référence aux dessins annexés sur lesquels :

— la figure 1 est une vue schématique d'un mode de réalisation particulier du dispositif objet de l'invention,

— la figure 2 est une vue schématique de moyens de grossissement utilisés dans le dispositif représenté sur la figure 1,

— la figure 3 est une vue schématique de moyens d'impaction utilisés dans ce dispositif et de moyens à fibres optiques, utilisables avec ces moyens d'impaction,

— la figure 4 est une vue schématique d'autres moyens à fibres optiques, utilisables avec ces moyens d'impaction, et

— la figure 5 illustre schématiquement et partiellement un dispositif conforme l'invention et adapté à un aérosol radioactif.

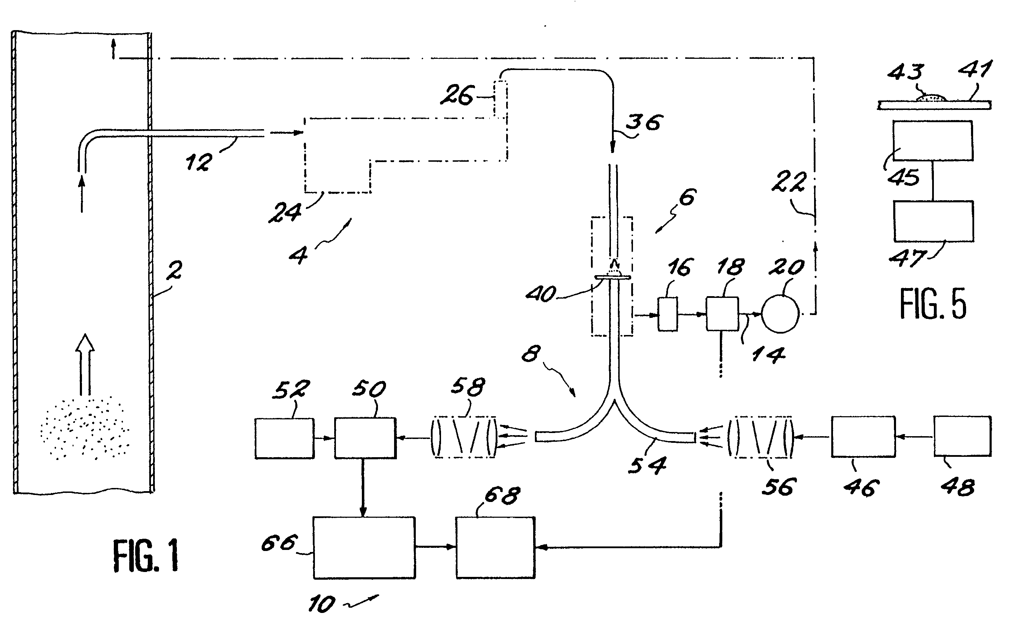

Sur la figure 1, on a représenté schématiquement un mode de réalisation particulier du dispositif objet de l'invention.

Le dispositif représenté sur la figure 1 est par exemple destiné à mesurer, en temps réel, la concentration massique d'un aérosol fluorescent tel que l'uranine dans l'air qui circule dans une canalisation, par exemple une gaine de ventilation 2.

Le dispositif comprend des moyens de grossissement 4, des moyens d'impaction 6, des moyens d'analyse 8 et des moyens électroniques de traitement 10.

Ce dispositif est inséré dans un circuit classique d'aspiration de l'air qui circule dans la canalisation.

Ce circuit comprend :

— un conduit 12 permettant l'extraction de l'air chargé d'aérosol pour amener cet air aux moyens de grossissement 4,

— un conduit 14 dans lequel circule l'air extrait des moyens d'impaction 6 et sur lequel sont montés sucsessivement à partir de la sortie de ces moyens d'impaction 6, un régulateur de débit 16, un débitmètre 18 et une pompe aspirante 20, et

— une canalisation 22 prévue pour renvoyer l'air extrait de la canalisation 2 dans cette dernière à partir de la pompe 20.

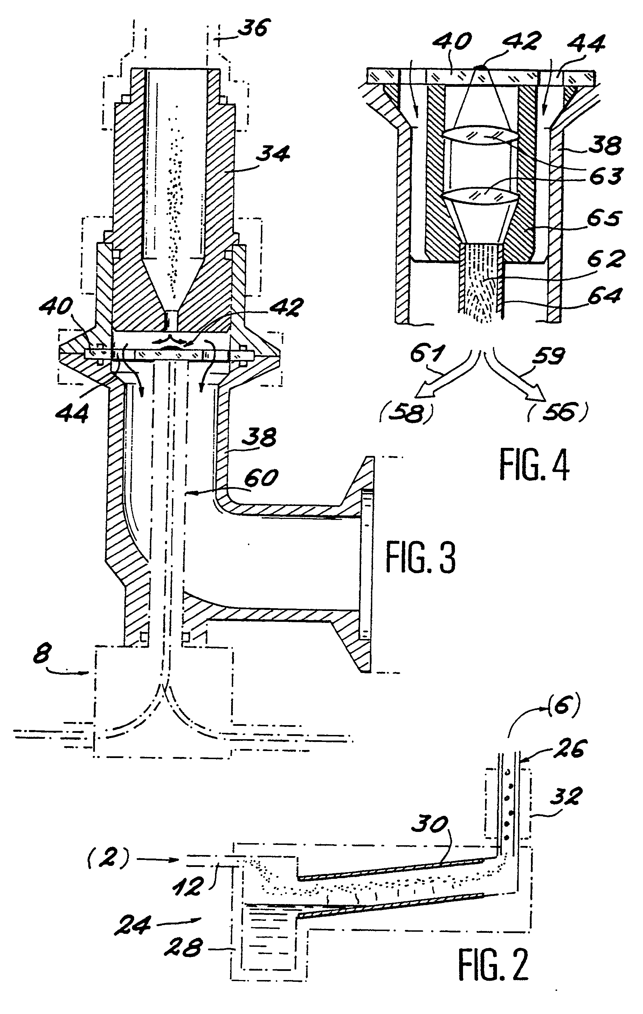

Les moyens de grossissement 4 sont du genre de ceux qui sont décrits dans le document (5) page 567, troisième paragraphe, et comprennent un saturateur 24 suivi d'un condenseur 26 (figure 2).

Le saturateur 24 comprend une chambre d'entrée 28 faisant également office de réservoir du liquide destiné à la formation des gouttelettes autour des particules d'aérosol. Il s'agit bien entendu d'un liquide approprié, choisi en fonction de l'aérosol.

A titre purement indicatif et nullement limitatif, avec un aérosol tel que l'uranine, on peut utiliser un liquide tel que le glycérol. On pourrait également utiliser tout autre liquide, de préférence peu toxique, dans lequel l'uranine est soluble en quantité suffisante, ce liquide étant peu volatil à température ambiante et susceptible, dans des conditions opératoires acceptables pour les moyens de grossissement, de produire des gouttelettes de diamètres au moins égaux à 1 micromètre.

Le saturateur 24 comprend également une canalisation 30 qui communique par une extrémité avec la chambre 28. Le condenseur 26 est une buse calibrée -de préférence verticale afin d'éviter les pertes de gouttelettes par sédimentation, celles-ci restant de toute manière relativement faibles- buse qui est généralement munie de moyens 32 de refroidissement tel qu'un générateur à effet Peltier et qui communique avec l'autre extrémité de la canalisation 30.

L'aérosol prélevé dans la gaine de ventilation 2, aboutit, par le conduit 12, au saturateur 24 dans lequel il se mélange à la vapeur du liquide.

La température dans le condenseur 26, température qui est inférieure à celle du saturateur, est fixée de telle manière que la vapeur se condense sur chaque particule d'aérosol. Cet aérosol se trouve ainsi transformé en gouttelettes de diamètre déterminé, de l'ordre de 2 micromètres par exemple.

Les moyens d'impaction ou impacteur 6 comprennent (figure 3) une buse accélératrice verticale 34 dont la partie supérieure communique avec la sortie du condenseur 26 par une canalisation 36 et dont la partie inférieure (partie accélératrice) est raccordée de façon étanche à une canalisation 38, elle-même raccordée à la canalisation 14.

Dans cette canalisation 38 est fixé, en regard de la partie inférieure de la buse 34, un support horizontal 40 servant de surface d'impaction et transparent aux rayonnements utilisés pour l'analyse des gouttelettes, rayonnements dont il sera question par la suite. Ce support est par exemple constitué par une lamelle de microscope ou une bande de matière plastique.

Il pourra, si besoin est, comporter une cavité destinée à collecter une quantité de gouttelettes plus importante.

L'air chargé des gouttelettes qui se sont formées dans le condenseur 26 est ainsi accéléré par la buse 34 et les gouttelettes tombent sur le support 40 qui en recueille la totalité, ou une fraction connue, déterminable à partir des conditions de fonctionnement. Un dépôt 42 de gouttelettes et donc d'aérosol se forme donc progressivement sur la face supérieure du support 40.

Des ouvertures 44 sont prévues dans le support 40 pour permettre l'évacuation de l'air chargé des gouttelettes non recueillies par le support 40. Cet air, aspiré par la pompe 20, quitte la canalisation 38 et retourne à la gaine de ventilation 2 par l'intermédiaire de la canalisation 22.

Les moyens d'analyse 8 comprennent une source lumineuse 46 prévue pour exciter la fluorescence de l'uranine recueillie par le support 40. Cette source est par exemple constituée par une lampe à rayonnement ultra-violet, alimentée par une source de haute tension 48.

Les moyens d'analyse 8 comprennent également un photomultiplicateur 50 alimenté par une source de haute tension 52, ainsi que des moyens à fibres optiques 54 prévus pour transmettre la lumière émise par la source 46 au dépôt 42 et pour transmettre la lumière de fluorescence émise par ce dépôt excité par le rayonnement ultraviolet, au photomultiplicateur 50.

Dans l'exemple représenté sur les figures 1 et 3, ces moyens 54 sont constitués par un coupleur optique en Y.

La lumière issue de la source 46 est injectée dans une première branche de ce coupleur 54 par l'intermédiaire d'un ensemble de lentilles et de filtres 56, ces filtres permettant de sélectionner les longueurs d'onde d'excitation de l'uranine.

La lumière de fluorescence émise par le dépôt est transmise par une deuxième branche du coupleur 54 est envoyée sur le photomultiplicateur 50 par l'intermédiaire d'un autre ensemble de lentilles et de filtres 58, les filtres de cet autre ensemble 58 évitant l'arrivée sur le photomultiplicateur 50 de rayonnements autres que la lumière de fluorescence.

La troisième branche du coupleur 54, protégée par un tube rigide 60 traverse la canalisation 38 par un passage étanche et l'extrémité de cette troisième branche se trouve au contact de la face inférieure du support 40, en regard de la zone de ce support où se forme le dépôt 42.

Au lieu d'un coupleur en Y on peut utiliser (figure 4) deux groupes ou faisceaux de fibres optiques 62, l'un des groupes, référencé 59, servant à amener la lumière d'excitation du dépôt et l'autre groupe, référencé 61, servant à transmettre la lumière de fluorescence.

Chaque fibre de l'un ou l'autre groupe a une extrémité clivée aboutissant à un système optique constitué de lentilles 63 dont le but est d'une part, de concentrer le plus possible la lumière excitatrice sur la surface de dépôt et d'autre part de recueillir la plus grande partie possible de la lumière émise par l'aérosol fluorescent. Toutes ces extrémités sont serrées les unes contre les autres dans un tube rigide 64 qui, comme le tube 60, traverse la canalisation 38 par un passage étanche. Le système optique, placé entre les extrémités clivées des fibres et le support 40, est maintenu dans la canalisation 38 par un support 65 muni d'ouvertures permettant la circulation d'air.

Lesdites extrémités des fibres 62 sont entremêlées de façon homogène, de façon à obtenir une excitation homogène du dépôt et une récupération homogène de la lumière de fluorescence.

Les moyens électroniques de traitement 10 sont prévus pour déterminer la concentration massique de l'aérosol en fonction des impulsions fournis par le photomultiplicateur 50. De tels moyens 10 sont par exemple commercialement disponibles auprès de sociétés d'optoélectronique telles que SOPRA ou ORIEL.

Plus précisément, ces moyens 10 comprennent des moyens 66 de comptage des impulsions fournies par le photomultiplicateur 50 et éventuellement un système microordinateur 68 relié aux moyens de comptage 66 et prévu pour calculer et afficher la concentration massique cherchée, en fonction des informations fournies par les moyens de comptage 66 et de valeurs de débit fournies par le débitmètre 18, ainsi que l'ensemble des paramètres correspondant à la mesure effectuée, pour permettre leur mémorisation, leur traitement et leur édition.

Avantageusement, le temps nécessaire à la mesure est fixé par un seuil de comptage correspondant donc à un nombre donné d'impulsions fournies par le photomultiplicateur 50, de manière à correspondre à l'optimum de sensibilité de mesure.

On obtient ainsi une meilleure sensibilité qu'avec les techniques connues dont un exemple à été rappelé plus haut.

En effet, avec la technique connue de test des filtres pour aérosols, le maximum de sensibilité actuellement obtenu correspond à une masse d'environ $10^{-10}$ gramme de matière fluorescente, collectée sur un filtre à un débit maximal de 200 litres par minute et mesurée dans un volume d'eau ammoniacale de 1 cm³ prélevé dans la solution d'un volume minimum de 10 cm³ nécessaire à la dissolution de l'uranine déposée sur le filtre. Ce maximum de sensibilité est obtenu en prenant toutes les précautions nécessaires pour réduire le bruit de fond dû au support filtrant et à la verrerie nécessaire à la mesure (lavage soigné de cette verrerie, mesure du niveau du bruit de fond et centrifugation de la solution obtenue avant la mesure).

Dans la réalisation de l'invention représentée sur la figure 1, on améliore grandement la sensibilité du fait que la fluorescence est concentrée dans un très faible volume, à savoir le volume des gouttelettes déposées sur le support, que l'on recueille sur un angle solide voisin de $2\pi$ sr la lumière fluorescente émise par le dépôt et que l'on dispose d'un dépôt permanent, ce qui permet éventuellement de profiter d'un effet d'accumulation.

On améliore encore la sensibilité en sélectionnant soigneusement les filtres optiques d'excitation et d'émission, en utilisant une source lumineuse d'excitation pulsée, apte à fournir des impulsions lumineuses d'intensité maximale élevée et en réduisant le bruit de fond lors de la détection de la lumière de fluorescence, ce qui peut être obtenu en refroidissant le photomultiplicateur 50.

Le dispositif de l'invention n'est pas limité à un emploi avec l'uranine. L'homme du métier peut adapter les éléments optiques de ce dispositif (en particulier les filtres des ensembles 56 et 58) afin de pouvoir utiliser ce dispositif avec un autre aérosol fluorescent.

En outre, l'homme du métier peut adapter ce dispositif à un emploi avec un aérosol liquide et non plus solide. Le dispositif peut être notamment adapté à la mesure de l'efficacité des filtres pour aérosols au moyen de l'aérosol DOP (imposé par la norme américaine de mesure), ou de tout autre liquide similaire comme le DEHS (diéthylhexylsébaçate) proposé actuellement comme substitut au DOP en raison des propriétés cancérigènes attribuées à celui-ci, à condition de marquer cet aérosol liquide, lorsqu'il est produit, avec un traceur fluorescent (par exemple le POTOMAK YELLOW pour le DOP) et de dimensionner l'ensemble saturateur-condenseur pour pouvoir l'utiliser avec la vapeur de ce même liquide.

De plus, d'autres méthodes qu'une analyse par fluorimétrie peuvent être utilisées pour effectuer la mesure de concentration sur le dépôt d'aérosol. Ainsi peut-on par exemple utiliser des moyens de détection nucléaire permettant ainsi de déterminer l'activité volumique d'un aérosol radioactif.

Dans ce cas, le dépôt 43 (figure 5) qui est l'homologue du dépôt 42 et qui peut alors émettre un rayonnement bêta ou gamma par exemple, est formé sur une face d'un support 41 qui est l'homologue du support 40 et qui est adapté, c'est-à-dire transparent à ce rayonnement, un détecteur approprié 45 étant placé en regard de l'autre face du support 41. Dans le cas où le rayonnement est de type bêta, le dépôt 43 peut être formé directement sur la face d'entrée du détecteur approprié correspondant, ceci étant d'ailleurs également envisageable dans le cas où le rayonnement est de type alpha ou gamma. Le détecteur approprié 45 fournit des informations à des moyens de traitement appropriés 47, permettant de connaître la teneur de l'air en l'aérosol radioactif considéré.

Enfin, les applications de l'invention ne sont pas limitées la mesure de l'efficacité des filtres pour aérosols. Ainsi la présente invention s'applique-t-elle également au traçage, au moyen d'uranine ou d'un autre aérosol fluorescent, de flux gazeux susceptibles de véhiculer des aérosols nocifs (radioactifs par exemple) à l'intérieur de locaux ventilés ou à l'extérieur d'installations présentant des risques pour leur environnement.

## Revendications

1. Dispositif de mesure de la teneur d'un gaz en un aérosol, à partir d'un prélèvement de ce gaz, comprenant des moyens (4) de grossissement, aptes à condenser sur l'aérosol prélevé une vapeur d'un liquide, de façon à obtenir des gouttelettes d'une solution de l'aérosol dans le liquide, caractérisé en ce qu'il comprend en outre :

— des moyens (6) d'impaction, aptes à projeter ces gouttelettes sur un support (40) prévu pour recueillir au moins une fraction connue de ces gouttelettes,

— des moyens (8) d'analyse en continu des gouttelettes ainsi recueillies, ces moyens d'analyse étant spécifiques de l'aérosol dont la teneur est à mesurer et aptes à fournir des informations relatives à ladite teneur, et

— des moyens (10) électroniques de traitement des informations, aptes à déterminer la teneur à partir de ces informations.

2. Dispositif selon la revendication 1, caractérisé en ce que l'aérosol est fluorescent et en ce que les moyens d'analyse comprennent des moyens opto-électroniques (8) d'excitation et de détection de fluorescence, aptes à fournir les informations.

3. Dispositif selon la revendication 2, caractérisé en ce que les moyens opto-électroniques (8) comprennent :

— des moyens (46, 48, 56) de formation d'un faisceau lumineux excitateur de fluorescence,

— des moyens (50, 52, 58) de détection d'une lumière de fluorescence résultant de l'excitation, et

— des moyens (54, 62) à fibres optiques aptes à transmettre le faisceau excitateur vers les gouttelettes recueillies et à transmettre la lumière de fluorescence vers les moyens de détection.

4. Dispositif selon la revendication 3, caractérisé en ce que le support (40) est transparent au faisceau excitateur et à la lumière de fluorescence, en ce que les gouttelettes sont recueillies sur une face du support (40), en ce que les moyens à fibres optiques comprennent deux groupes de fibres optiques (62), chaque fibre optique (62) ayant une extrémité placée en regard de l'autre face du support (40), en ce que les extrémités des fibres optiques (62), qui sont placées en regard de l'autre face du support (40), sont entremêlées et en ce que les deux groupes (62) sont respectivement prévus pour transmettre le faisceau excitateur et la lumière de fluorescence.

5. Dispositif selon la revendication 1, caractérisé en ce que, l'aérosol étant émetteur d'un rayonnement de type alpha, béta ou gamma, les moyens d'analyse (8) comprennent des moyens de détection de ce rayonnement, aptes à fournir les informations.

6. Dispositif selon l'une quelconque des revendications 1 à 5, caractérisé en ce que l'aérosol est solide.

7. Dispositif selon la revendication 6, caractérisé en ce que l'aérosol est de la fluorescéine sodée.

8. Dispositif selon l'une quelconque des revendications 1 à 5, caractérisé en ce que l'aérosol est liquide.

## Patentansprüche

1. Vorrichtung zur Messung des Gehaltes eines Gases an einem Aerosol, ausgehend von einer Probe dieses Gases, die Vergrößerungseinrichtungen (4) umfaßt, die in der Lage sind, auf dem entnommenen Aerosol einen Dampf einer Flüssigkeit in der Weise zu kondensieren, daß Tröpfchen einer Lösung des Aerosols in der Flüssigkeit erhalten werden, dadurch gekennzeichnet, daß sie außerdem umfaßt :

— Aufpralleinrichtungen (6), die in der Lage sind, diese Tröpfchen auf einen Träger (40) zu schleudern, der vorgesehen ist zum Sammeln mindestens eines bekannten Bruchteils dieser Tröpfchen,

— Einrichtungen (8) zur kontinuierlichen Analyse der so gesammelten Tröpfchen, wobei diese Analyseneinrichtungen spezifisch sind für das Aerosol, dessen Gehalt gemessen werden soll und in der Lage sind, Informationen in bezug auf diesen Gehalt zu liefern, und

— elektronische Einrichtungen (10) zur Behandlung dieser Informationen, die geeignet sind, ausgehend von diesen Informationen, den Gehalt zu bestimmen.

2. Vorrichtung nach Anspruch 1, dadurch gekennzeichnet, daß das Aerosol fluoreszierend ist und daß die Analyseneinrichtungen elektronenoptische Einrichtungen (8) zur Erregung und zum Nachweis der Fluoreszenz umfassen, welche die Informationen liefern können.

3. Vorrichtung nach Anspruch 2, dadurch gekennzeichnet, daß die elektronenoptischen Einrichtungen (8) umfassen :

— Einrichtungen (46, 48, 56) zur Bildung eines die Fluoreszenz erregenden Lichtstrahlbündels,

— Einrichtungen (50, 52, 58) zum Nachweis eines Fluoreszenzlichtes, das aus der Erregung resultiert, und

— optische Fasereinrichtungen (54, 62), die geeignet sind zur Übertragung des Erregerstrahlenbündels auf die gesammelten Tröpfchen und zur Übertragung des Fluoreszenzlichtes auf die Detektoreinrichtungen.

4. Vorrichtung nach Anspruch 3, dadurch gekennzeichnet, daß der Träger (40) gegenüber dem Erregerstrahlenbündel und gegenüber dem Fluoreszenzlicht transparent ist, daß die Tröpfchen auf einer Oberfläche des Trägers (40) gesammelt werden, daß die optischen Fasereinrichtungen zwei Gruppen von optischen Fasern (62) umfassen, wobei jede optische Faser (62) ein Ende aufweist, das dem Träger (40) gegenüberliegend angeordnet ist, daß die Enden der optischen Fasern (62), die in bezug auf die Oberfläche des Trägers (40) gegenüberliegend angeordnet sind, vermischt sind und daß die beiden Gruppen (62) jeweils vorgesehen sind, um das Erregerstrahlenbündel und das Fluoreszenzlicht zu übertragen.

5. Vorrichtung nach Anspruch 1, dadurch gekennzeichnet, daß, da das Aerosol α-, β- oder γ-Strahlen emittiert, die Analyseneinrichtungen (8) Einrichtungen zum Nachweis dieser Strahlung aufweisen, welche die Informationen liefern können.

6. Vorrichtung nach einem der Ansprüche 1 bis 5, dadurch gekennzeichnet, daß das Aerosol ein Feststoff ist.

7. Vorrichtung nach Anspruch 6, dadurch gekennzeichnet, daß das Aerosol Natriumfluorescein ist.

8. Vorrichtung nach einem der Ansprüche 1 bis 5, dadurch gekennzeichnet, daß das Aerosol eine Flüssigkeit ist.

## Claims

1. Device for measuring the content of a gas in an aerosol on the basis of a sampling of said gas, comprising enlargement means (4) able to condense on the sampled aerosol a vapour of a liquid, so as to obtain droplets of a solution of the aerosol in the liquid, characterized in that it also comprises impaction means (6), able to spray droplets onto a support (40) provided for collecting at least one known fraction of these droplets, means (8) for the continuous analysis of the thus collected droplets, said analysis means being specific to the aerosol whose content is to be measured and able to supply information relative to said content and electronic means (10) for processing the information and able to determine the content on the basis of said information.

2. Device according to claim 1, characterized in that the aerosol is fluorescent and that the analysis means incorporate optoelectronic means (8) for exciting and detecting fluorescence and able to supply information.

3. Device according to claim 2, characterized in that the optoelectronic means (8) incorporate means (46, 48, 56) for forming a fluorescence exciting light beam, means (50, 52, 58) for detecting a fluorescent light resulting from the excitation and fibre optics means (54, 62) able to transmit exciting light to the droplets collected and to transmit the fluorescent light to the detection means.

4. Device according to claim 3, characterized in that the support (40) is transparent to the exciting beam and to the fluorescent light, in that the droplets are collected on one face of the support (40), in that the fibre optics means incorporate two groups of optical fibres (62), each optical fibre (62) having one end positioned facing the other face of support (40), in that the ends of the optical fibres (62), placed facing the other face of the support (40), are intermixed and in that the two groups (62) are respectively provided for transmitting the exciting beam and the fluorescent light.

5. Device according to claim 1, characterized in that the aerosol being an emitter of alpha, beta or gamma radiation, the analysis means (8) incorporate means for detecting this radiation and able to supply information.

6. Device according to any one of the claims 1 to 5, characterized in that the aerosol is solid.

7. Device according to claim 6, characterized in that the aerosol is sodium-containing fluorescein.

8. Device according to any one of the claims 1 to 5, characterized in that the aerosol is liquid.

FIG. 1

FIG. 5

EP 0 284 469 B1

EP 0 284 469 B1

FIG. 4

FIG. 3

FIG. 2